# DEMANDE DE BREVET EUROPEEN

(11) **EP 3 739 948 A1**
(43) Date de publication de la demande: **18.11.2020**
(21) Numéro de dépôt: 20184873.6
(22) Date de dépôt: 05.06.2013
(51) Int. Cl.: H04W 28/06

(54) **TRAMES DE CONTRÔLE DE COURTE DURÉE EN COUCHE PHYSIQUE**

(30) Priorité: 05.06.2012 FR 1255196
(62) Demande divisionnaire de: 13733347.2
(71) Demandeur: ORANGE, 75015 Paris (FR)
(72) Inventeur: CHRISTIN, Philippe, 92326 CHATILLON (FR); CARIOU, Laurent, 92326 CHATILLON (FR)

(57) **Abrégé**

L'invention comprend un procédé d'émission d'une trame de contrôle par une entité émettrice (EE1) vers une entité réceptrice (ER1), la trame de contrôle (RTS1) comprenant un champ d'entête (SIG') dit de première couche, destiné à transporter des informations relatives à une première couche, le procédé comprenant une étape de modulation selon une première technique modulation, et, préalablement à l'étape de modulation, une étape d'insertion d'informations relatives à une deuxième couche dans ledit champ d'entête de première couche.

## Description

### 1. Domaine de l'invention

Le domaine de l'invention est celui des systèmes de communication utilisant un canal de transmission radioélectrique, électrique ou optique, et plus particulièrement celui de la gestion d'un canal à l'aide de trames de contrôle, lorsqu'il est partagé entre plusieurs entités émettrices ou réceptrices.

### 2. Etat de la technique antérieure

Dans les systèmes de communication radio, courant porteur en ligne et optique sans fil, le canal de transmission est une ressource partagée et perturbée par les interférences entre les différentes entités émettrices et réceptrice partageant le canal, et par les collisions entre les différentes trames de données transitant dans le canal. Pour fiabiliser les échanges de trames de données, des trames dites "de contrôle" sont échangées entre les entités émettrice et réceptrice, antérieurement et postérieurement à un échange de trames de données.

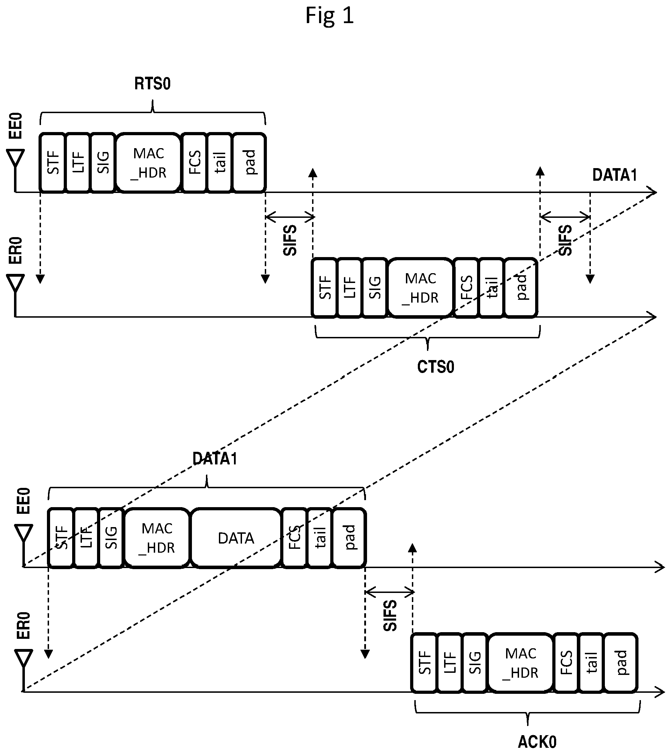

Les trames de données et les trames de contrôle sont de même format. La **figure 1** illustre la composition d'une trame en se basant sur l'exemple selon la norme IEEE 802.11 (WiFi) d'une trame de données DATA1 et de trois trames de contrôle RTS0, CTS0 et ACK0. De telles trames comprennent toutes les parties suivantes :
- un entête PLCP (Physical Layer Convergence Protocol, ou protocole de convergence de la couche physique), comprenant les champs STF (Short Training Field, ou champ de symboles d'apprentissage courts), LTF (Long Training Field, ou champ de symboles d'apprentissage longs) et SIG (Signal Field, ou champ de signalisation),
- un entête MAC (Médium Access Control, ou contrôle d'accès au support) avec un champ Frame Control indiquant le type de la trame (DATA pour une trame de données ou ACK pour une trame d'acquittement, par exemple), ainsi que un ou plusieurs champs pouvant être, entre autres, un champ adresse MAC source, un champ adresse MAC destination, et/ou un champ Duration (durée d'un échange de trame),
- les données MAC, absentes si la trame est une trame de contrôle,
- et d'autres champs tels que FCS (Frame Check Sequence, ou séquence de vérification d'intégrité de trame), tail (queue), pad (padding, ou bourrage).

Le champ STF est invariant et sert à la synchronisation temporelle. Le champ LTF sert de synchronisation fréquentielle, et le champ SIG sert de signalisation de données à destination du récepteur.

Les champs et les données sont modulés avec une modulation OFDM (Orthogonal Frequency Division Multiplexing, ou multiplexage par division en fréquences orthogonales). Une trame se présente alors comme une succession de symboles OFDM.

Dans le modèle de communication OSI (Open Systems Interconnection, ou interconnexion de systèmes ouverts) en 7 couches, utilisé par les réseaux locaux selon la norme IEEE 802.11, la sous-couche PLCP fait partie de la couche physique, qui est la première couche et la plus basse. La sous-couche MAC fait partie de la couche liaison de données, qui est la deuxième couche du modèle. En réception d'une trame de données ou de contrôle, la sous-couche PLCP d'une entité détecte d'abord le début de trame à l'aide du champ STF. Si la synchronisation temporelle est correcte pour une trame WiFi, la trame est démodulée et le résultat est remonté à la sous-couche MAC. La sous-couche MAC vérifie l'intégrité de la trame à l'aide du champ FCS, et selon le résultat, elle vérifie en plus si la trame est bien destinée à l'entité, à l'aide de l'entête MAC. De façon similaire, le mécanisme de génération d'une trame de données ou d'une trame de contrôle nécessite aussi des interactions entre les deux premières couches, physique et liaison de données.

Pour fiabiliser l'échange d'une trame de données, une trame de contrôle de type RTS (Request To Send, ou demande d'émission, en anglais) est d'abord émise par l'entité émettrice. Elle est destinée à réserver le canal pendant une durée déterminée. L'entité réceptrice répond en émettant une trame de contrôle de type CTS (Clear To Send, ou libre pour émission, en anglais). Elle est destinée à confirmer la réservation du canal, pendant une durée corrigée. L'entité émettrice émet alors la trame de données, à laquelle l'entité réceptrice répond par une trame de contrôle de type ACK (ACKnowldgement, ou acquittement, en anglais).

Il existe également une trame de contrôle de type PSPOLL (Power Save Polling, ou scrutation en économie d'énergie, en anglais), émise par une entité réceptrice lorsqu'elle sort d'une période de veille, afin de signaler à une entité émettrice qu'elle est prête à recevoir une trame de données. Si l'entité émettrice a effectivement une trame de données à lui émettre, elle le fait. Sinon, elle lui émet une trame de contrôle de type ACK.

Le délai SIFS (Short Inter-Frame Sequence, ou espacement inter-trame court, en anglais) permet de laisser, aux entités concernées par la transmission, le temps de passer du mode émission au mode réception (et inversement). Ce délai est inclus dans le calcul de la valeur du champ Duration de l'entête MAC, le cas échéant.

Les données d'une trame de données sont de taille variable, allant d'environ 100 octets pour de la voix sur protocole Internet, ou 127 octets pour des données échangées de machine à machine, à plusieurs kilo-octets pour de la vidéo. Selon la norme IEEE 802.11a, la transmission de 100 octets peut prendre 40µs, alors que celle d'un paquet de 1500 octets peut prendre jusqu'à 2064µs. L'ensemble des octets composant la partie MAC (entête et données) est modulé à un débit optimisé en fonction des conditions du canal de transmission, par exemple à 36 Mbit/s pour la technique 16QAM (16-state Quadrature Amplification Modulation, ou modulation d'amplitude en quadrature à 16 états).

Le champ SIG (24 octets) est modulé à un débit inférieur à celui de la partie MAC, par exemple à 6 Mbit/s pour la technique BPSK (Binary Phase Shift Keying, ou modulation binaire par déplacement de phase), ce qui rend le champ SIG plus robuste que les champs de la couche MAC. En effet, les signaux modulés ont une portée différente selon le débit utilisé, plus le débit est élevé, plus la portée d'un signal est réduite et le risque d'erreur à la réception élevé.

Selon la norme IEEE 802.11a, l'occupation du canal de transmission par une trame de contrôle (avec son entête MAC de 20 octets) est de l'ordre de 32µs. Pour les trafics de données dont les trames de données relativement courtes peuvent prendre environ 40µs d'occupation de canal, les trames de contrôle représentent donc une part importante du trafic, par rapport aux trames "utiles". C'est le cas notamment des trafics de voix sur IP et des trafics de données entre machines, où la bande passante occupée par les trames de contrôle est un problème.

De plus, la présence d'un entête MAC modulé à un débit supérieur par rapport au reste de la trame de contrôle réduit sa robustesse, et constitue un facteur de complexité pour les opérations de modulation et démodulation de la trame contrôle. Pour des entités émettrices ou réceptrices fortement contraintes en énergie, comme par exemple celles participants à des échanges entre machines, ce facteur de complexité engendre une consommation d'énergie qui est également un problème.

La demande de brevet US 2009/0092039 A1 divulgue un procédé d'émission d'une trame de données, dans lequel un entête MAC est inséré dans le champ SIG, mais dans lequel subsiste une partie de trame qui doit être modulée selon la technique de modulation propre à la sous-couche MAC, en plus de la modulation appliquée au champ SIG, propre à la sous-couche PLCP.

Il existe donc un besoin d'une solution ne présentant pas ces inconvénients.

### 3. Exposé de l'invention

L'invention vient améliorer la situation à l'aide d'un procédé d'émission d'une trame de contrôle par une entité émettrice vers une entité réceptrice, la trame de contrôle comprenant un champ d'entête dit de première couche, destiné à transporter des informations relatives à une première couche, le procédé comprenant une étape de modulation selon une première technique modulation, et préalablement à l'étape de modulation, une étape d'insertion d'informations relatives à une deuxième couche dans ledit champ d'entête de première couche.

Grâce à l'invention, un entête de deuxième couche n'est plus nécessaire dans la trame de contrôle. Ceci libère un entête de première couche destiné à traiter l'entête de deuxième couche. Par rapport à la technique antérieure, ce procédé permet donc de raccourcir la longueur de la trame de contrôle, et permet en plus de n'utiliser qu'une seule technique de modulation, plutôt que deux (une par couche).

Selon la technique antérieure, par exemple en WiFi, les informations relatives à la couche MAC (deuxième couche), c'est-à-dire le type de trame de contrôle et ses paramètres, sont transportées dans l'entête MAC. Selon la technique antérieure il existe aussi un champ SIG de la couche PLCP (première couche), destiné à transporter des informations nécessaires au traitement de l'entête MAC. Selon l'invention, les informations relatives à la couche MAC, c'est-à-dire le type de trame de contrôle et ses paramètres, sont insérées dans le champ SIG. Ceci d'une part libère l'entête MAC, qui n'est plus inséré dans la trame de contrôle, et d'autre part libère l'usage originel du champ SIG.

Selon la technique antérieure, l'occupation du canal de transmission par une trame de contrôle WiFi (avec son entête MAC de 20 octets) est de l'ordre de 32µs. Pour une trame de contrôle WiFi selon l'invention (sans entête MAC), cette durée est de l'ordre de 20µs.

Avec l'invention, la trame de contrôle ne comprenant plus de champ ou d'entête relatif à la couche MAC, aucune modulation selon une technique de modulation relative à cette couche MAC n'est nécessaire. Seule reste la modulation du champ SIG selon une technique de modulation relative à la couche PLCP, plus robuste et moins complexe que la technique de modulation relative à la couche MAC.

On comprend que grâce à l'invention, une trame de contrôle est plus courte, et que l'entité émettrice n'a besoin de mettre en oeuvre qu'un seul mode de modulation, celui relatif à la première couche, qui se trouve être le plus robuste. Ceci permet de réduire la bande passante prise par les trames de contrôle dans le trafic de données, d'en augmenter la robustesse de transmission, et de réduire le nombre et la complexité des opérations de modulation dans l'entité émettrice.

Selon un aspect de l'invention, les informations insérées relatives à la deuxième couche comprennent au moins une information d'un groupe comprenant au moins:
- une information relative au type de trame de contrôle (PLCP type),
- une information relative à la durée (DUR) de l'échange entre les entités émettrice et réceptrice,
- un identifiant de l'entité émettrice (Partial TA),
- un identifiant de l'entité réceptrice (Partial RA).

Avantageusement, avec les informations insérées dans le champ d'entête relatif à la première couche, il est possible d'obtenir les différents types de trames de contrôle nécessaires à l'échange de trames de données entre deux entités.

Le tableau suivant liste en guise d'exemple la composition du champ SIG pour les principales trames de contrôle utilisées en WiFi:

| Présent dans SIG → | Durée de l'échange | Identifiant entité émettrice | Identifiant entité réceptrice |
|---|---|---|---|
| Type de trame de contrôle ↓ | | | |
| RTS | oui | oui | oui |
| CTS | oui | non | oui |
| ACK | non | non | oui |
| PSPOLL | non | oui | oui |

Par exemple, une trame de contrôle ACK (trame dite "d'acquittement" en WiFi) comprend dans son champ SIG, en plus du type "ACK", un identifiant de l'entité réceptrice à laquelle est destinée la trame ACK, mais ne comprend pas un identifiant de l'entité émettrice, ni d'information de durée.

L'invention concerne aussi un procédé de réception d'une trame de contrôle par une entité réceptrice depuis une entité émettrice, la trame de contrôle comprenant un champ d'entête destiné à transporter des informations relatives à une première couche, le procédé comprenant une étape de démodulation dudit champ d'entête selon une première technique de modulation, et, suite à l'étape de démodulation, une étape d'extraction d'informations relatives à une deuxième couche, du champ d'entête démodulé.

Les informations ainsi extraites peuvent être transmises à la deuxième couche, par exemple la couche MAC, afin d'y être traitées en tant qu'informations relatives à cette couche.

Par rapport à la technique antérieure, ce procédé permet de n'utiliser qu'un seul type de démodulation lors de la réception d'une trame de contrôle, plutôt que deux. Ceci permet de réduire le nombre et la complexité des opérations de démodulation dans l'entité réceptrice.

Selon un aspect de l'invention, les informations extraites ne sont pas transmises à la deuxième couche si aucune correspondance n'est détectée entre l'identifiant de l'entité réceptrice et les informations extraites.

Avantageusement, le traitement d'une trame de contrôle reçue par l'entité réceptrice mais qui ne lui est pas destinée s'arrête au niveau de la première couche, par exemple la couche PLCP, sans faire intervenir la deuxième couche, par exemple la couche MAC. Ceci occasionne un gain en temps et en calculs pour l'entité réceptrice.

L'invention concerne aussi un procédé d'émission d'une trame de données par une entité émettrice vers une entité réceptrice, comprenant, préalablement à une étape d'émission de la trame de données, les étapes suivantes:
- émission d'une trame de contrôle de demande de réservation, destinée à réserver un canal de communication entre l'entité émettrice et l'entité réceptrice, la trame de contrôle de demande de réservation étant émise conformément au procédé d'émission d'une trame de contrôle qui vient d'être décrit,
- réception d'une trame de contrôle de confirmation de réservation, destinée à confirmer à l'entité émettrice la réservation du canal de communication par l'entité réceptrice, la trame de contrôle de confirmation de réservation étant reçue conformément au procédé de réception d'une trame de contrôle qui vient d'être décrit.

Pour chaque trame de données émise, au moins deux trames de contrôle sont échangées entre les entités émettrice et réceptrice. La part des trames de contrôle par rapport à celle des trames de données est importante, particulièrement lorsque les trames de données sont courtes. On comprend donc que grâce à l'invention, la part prise par le volume des trames de contrôle dans le trafic généré par l'émission de trames de données est diminuée, puisque la taille des trames de contrôle est diminuée par rapport à la technique antérieure.

L'invention concerne aussi un procédé de réception d'une trame de données par une entité réceptrice depuis une entité émettrice, comprenant, suite à une étape de réception de la trame de données, une étape d'émission d'une trame de contrôle d'acquittement, destinée à acquitter à l'entité émettrice la réception de la trame de données, la trame de contrôle d'acquittement étant émise conformément au procédé d'émission d'une trame de contrôle qui vient d'être décrit.

Pour chaque trame de données reçue, au moins une trame de contrôle est émise. La part des trames de contrôle par rapport à celle des trames de données est importante, particulièrement lorsque les trames de données sont courtes. On comprend donc que grâce à l'invention, la part prise par le volume des trames de contrôle dans le trafic généré par la réception de trames de données est diminuée, puisque la taille des trames de contrôle est diminuée par rapport à la technique antérieure.

Selon un aspect de l'invention, l'étape de réception d'une trame de données est précédée d'une étape d'émission d'une trame de contrôle d'indication de sortie de veille, destinée à informer l'entité émettrice que l'entité réceptrice est sortie d'un mode veille et prête à recevoir une trame de données, la trame de contrôle d'indication de sortie de veille étant émise conformément au procédé d'émission d'une trame de contrôle qui vient d'être décrit.

Par exemple en WiFi, cet aspect permet de prendre en compte une trame de contrôle de type "PSPOLL".

L'invention concerne aussi un dispositif d'émission d'une trame de contrôle par une entité émettrice vers une entité réceptrice, la trame de contrôle comprenant un champ d'entête destiné à transporter des informations relatives à une première couche, ledit champ d'entête étant modulé selon une première technique modulation, le dispositif comprenant une unité d'insertion d'informations relatives à une deuxième couche, dans le champ d'entête relatif à la première couche.

L'invention concerne aussi un dispositif de réception d'une trame de contrôle par une entité réceptrice depuis une entité émettrice, la trame de contrôle comprenant un champ d'entête destiné à transporter des informations relatives à une première couche, ledit champ d'entête étant démodulé selon une première technique de modulation, le dispositif comprenant une unité d'extraction d'informations relatives à une deuxième couche, du champ d'entête relatif à la première couche.

L'invention concerne aussi un dispositif d'émission d'une trame de données par une entité émettrice vers une entité réceptrice, comprenant :
- un dispositif d'émission d'une trame de contrôle tel que décrit précédemment, apte à générer une trame de contrôle de demande de réservation, destinée à réserver pour la trame de données un canal de communication entre l'entité émettrice et l'entité réceptrice,
- un dispositif de réception d'une trame de contrôle tel que décrit précédemment, apte à traiter une trame de contrôle de confirmation de réservation, destinée à confirmer à l'entité émettrice la réservation du canal de communication par l'entité réceptrice.

L'invention concerne aussi un dispositif de réception d'une trame de données par une entité réceptrice depuis une entité émettrice, comprenant :
- un dispositif d'émission d'une trame de contrôle tel que décrit précédemment, apte à générer une trame de contrôle d'acquittement, destinée à acquitter à l'entité émettrice la réception de la trame de données par l'entité réceptrice.

L'invention concerne aussi un signal de contrôle portant une trame de contrôle émise par une entité émettrice, et destinée à une entité réceptrice, la trame de contrôle comprenant un champ relatif à une première couche modulé selon une technique de modulation relative à la première couche, le champ comprenant des informations relatives à une deuxième couche.

Par rapport à la technique antérieure, ce signal selon l'invention occupe moins de bande passante car les informations relatives à la deuxième couche ne sont pas insérées dans un champ relatif à la deuxième couche, mais dans un champ préexistant relatif à la première couche, dont la réutilisation à cette fin est permise en raison de l'absence de champ relatif à la deuxième couche.

Selon un aspect de l'invention, les informations relatives à la deuxième couche comprises dans le signal comprennent au moins une information d'un groupe comprenant au moins:
- une information relative au type de trame de contrôle,
- une information relative à la durée de l'échange entre les entités émettrice et réceptrice,
- un identifiant de l'entité émettrice,
- un identifiant de l'entité réceptrice.

Ainsi, le signal peut porter n'importe laquelle des trames de contrôle nécessaires au transport d'une trame de données entre une entité émettrice et une entité réceptrice, dont, entre autres, les trames de réservation de canal, de confirmation de réservation de canal, d'acquittement ou d'indication de sortie de veille.

L'invention concerne aussi une entité émettrice connectée à un réseau de communication, comprenant au moins un dispositif d'émission d'une trame de données tel que décrit précédemment.

Une telle entité émettrice est par exemple le point d'accès ou une station d'un réseau WiFi. Le point d'accès est par exemple une passerelle d'accès internet domestique ou professionnelle, et la station est par exemple un ordinateur, une tablette, un téléphone ou un décodeur de signal de télévision.

L'invention concerne aussi une entité réceptrice connectée à un réseau de communication, comprenant au moins un dispositif de réception d'une trame de données tel que décrit précédemment.

Une telle entité réceptrice est par exemple le point d'accès ou une station d'un réseau WiFi. Le point d'accès est par exemple une passerelle d'accès internet domestique ou professionnelle, et la station est par exemple un ordinateur, une tablette, un téléphone ou un décodeur de signal de télévision.

L'invention concerne également une entité émettrice et réceptrice, comprenant à la fois un dispositif d'émission d'une trame de données tel que décrit précédemment et un dispositif de réception d'une trame de données tel que décrit précédemment.

L'invention concerne aussi un système de communication, caractérisé en ce qu'il comprend au moins une entité émettrice telle que décrite précédemment et au moins une entité réceptrice telle que décrite précédemment.

Un tel système comprend par exemple le point d'accès et la ou les stations d'un réseau WiFi.

L'invention concerne aussi un programme d'ordinateur, comprenant des instructions pour la mise en œuvre des étapes du procédé d'émission d'une trame de contrôle tel que décrit précédemment, lorsque ce procédé est exécuté par un processeur.

L'invention concerne également un support d'enregistrement du programme qui vient d'être décrit, lisible par ordinateur, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur, comprenant des instructions pour la mise en œuvre des étapes du procédé de réception d'une trame de contrôle tel que décrit précédemment, lorsque ce procédé est exécuté par un processeur.

L'invention concerne également un support d'enregistrement du programme qui vient d'être décrit, lisible par ordinateur, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur, comprenant des instructions pour la mise en œuvre des étapes du procédé d'émission d'une trame de données tel que décrit précédemment, lorsque ce procédé est exécuté par un processeur.

L'invention concerne également un support d'enregistrement du programme qui vient d'être décrit, lisible par ordinateur, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention concerne aussi un programme d'ordinateur, comprenant des instructions pour la mise en œuvre des étapes du procédé de réception d'une trame de données tel que décrit précédemment, lorsque ce procédé est exécuté par un processeur.

L'invention concerne enfin un support d'enregistrement du programme qui vient d'être décrit, lisible par ordinateur, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente la structure d'une trame de données et la structure de différentes trames de contrôle selon la technique antérieure,
- la figure 2 présente la structure d'une trame de données et la structure de différentes trames de contrôle selon un mode de réalisation de l'invention,
- les figures 3A à 3D présentent en détail la structure de différentes trames de contrôle selon un mode de réalisation de l'invention,
- la figure 4 présente les étapes du procédé d'émission d'une trame de contrôle selon un mode de réalisation de l'invention,
- la figure 5 présente les étapes du procédé de réception d'une trame de contrôle selon un mode de réalisation de l'invention,
- la figure 6 présente des étapes du procédé de réception d'une trame de contrôle selon un autre mode de réalisation de l'invention,
- la figure 7 présente un exemple de structure d'une entité émettrice EE1, selon l'invention,
- la figure 8 présente un exemple de structure d'une entité réceptrice ER1, selon l'invention.

### 5. Description détaillée d'au moins un mode de réalisation de l'invention

Dans la suite de la description, on considère le cas de modes de réalisation de l'invention par des entités communiquant entre elles par WiFi, c'est-à-dire par un canal de transmission selon la norme IEEE 802.11. L'invention ne se limite pas à ce cas, et s'applique à d'autres types de canaux de transmission tels que le courant porteur en ligne (norme IEEE 1901), ou l'optique sans fil (norme IEEE 802.15.7).

La structure d'une trame de données DATA1 et la structure des trames de contrôle RTS0, CTS0 et ACK0, selon la technique antérieure, ont été présentées plus haut en référence à la **figure 1****.**

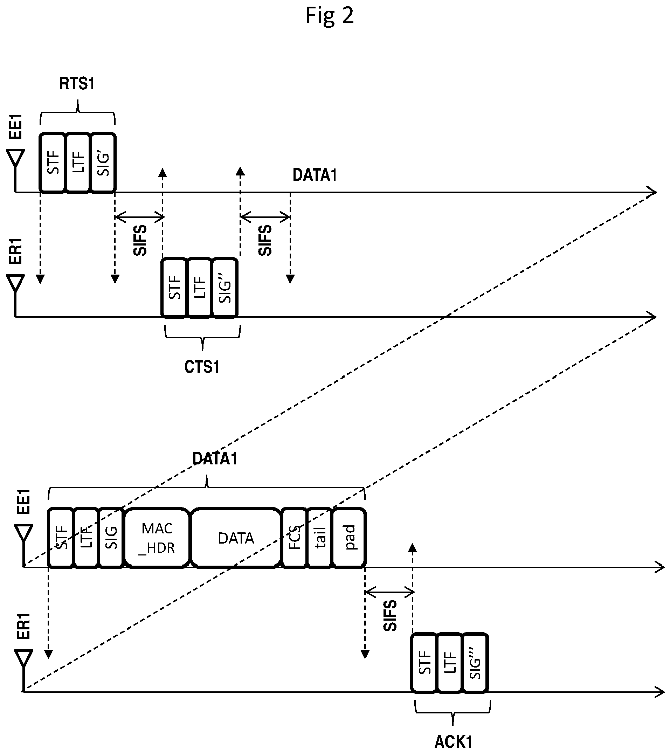

La **figure 2** présente la structure d'une trame de données et la structure de différentes trames de contrôle, selon un mode de réalisation de l'invention.

L'enchainement, illustré en tant qu'exemple, entre trames de contrôle et trame de données reste inchangé par rapport à la technique antérieure, et a été décrit en référence à la figure 1.

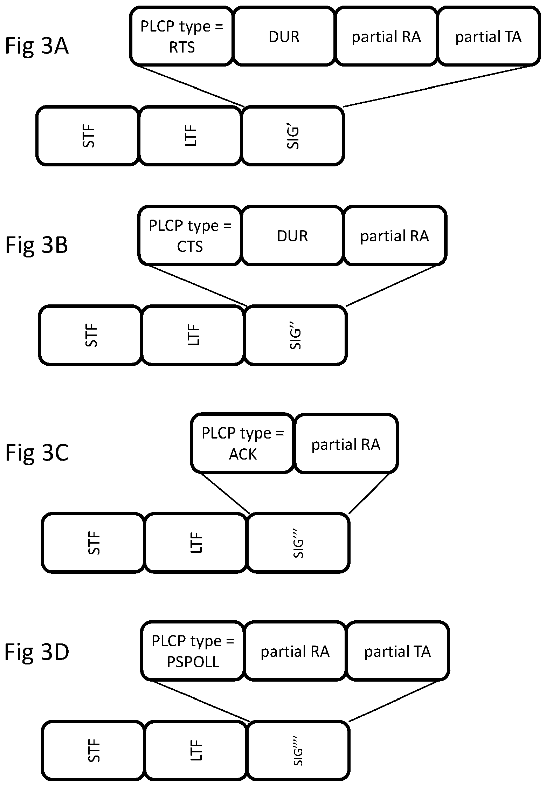

Les trames de contrôle RTS1, CTS1 et ACK1, respectivement de demande de réservation de canal, de confirmation de réservation de canal, et d'acquittement, contrairement à la technique antérieure, ne comprennent ni d'entête MAC, ni les champs suivants, FCS, tail et pad. Les trames de contrôle selon l'invention comprennent les champs STF et LTF qui restent inchangés par rapport à la technique antérieure, et un champ SIG modifié. Tel qu'illustré dans les figures 3A à 3D, l'invention propose un usage non prévu du champ SIG, en y insérant des informations relatives à la deuxième couche (MAC), habituellement insérées dans l'entête MAC.

Préalablement à l'émission de la trame de contrôle, le champ SIG modifié est modulé selon une technique de modulation bas-débit spécifique à la première couche, par exemple BPSK.

Ainsi, tout en maintenant la fonctionnalité des trames de contrôle, non seulement elles sont plus courtes, mais il n'est plus nécessaire de leur appliquer de modulation haut-débit spécifique à l'entête MAC, par exemple 16QAM.

Les **figures 3A à 3D** présentent en détail la structure de différentes trames de contrôle selon un mode de réalisation de l'invention.

Il est rappelé que les champs STF et LTF restent inchangés par rapport à la technique antérieure.

Le champ SIG modifié peut comprendre jusqu'à 4 champs:
- PCLP type: indique le type de trame de contrôle; ce champ est toujours présent,
- DUR: indique une durée d'échange de trame(s); cette durée peut être exprimée en microsecondes, ou en nombre de symboles OFDM, chaque symbole OFDM ayant une durée de 4 microsecondes,
- Partial RA: identifiant simplifié de l'entité réceptrice, pouvant être une adresse MAC destination simplifiée telle que le Partial AID selon la norme 802.11,
- Partial TA: identifiant simplifié de l'entité émettrice, pouvant être une adresse MAC source simplifiée telle que le Partial AID selon la norme 802.11.

La **figure 3A** illustre la composition d'une trame de contrôle de type RTS, c'est-à-dire une trame émise par une entité souhaitant émettre une trame de données vers une entité réceptrice, destinée à demander la réservation d'un canal de communication pour une certaine durée entre les deux entités. Le champ SIG' d'une trame de contrôle de type RTS comprend, outre un champ PLCP type (de valeur RTS), un champ DUR, un champ Partial RA et un champ Partial TA.

La **figure 3B** illustre la composition d'une trame de contrôle de type CTS, c'est-à-dire une trame émise par une entité ayant préalablement reçu une trame de contrôle de type RTS, destinée à confirmer la réservation d'un canal de communication pour une certaine durée, la durée étant corrigée par cette entité pour prendre en compte la durée écoulée depuis la réception de la trame de contrôle RTS. Le champ SIG" d'une trame de contrôle de type CTS comprend, outre un champ PLCP type (de valeur CTS), un champ DUR, et un champ Partial RA.

La **figure 3C** illustre la composition d'une trame de contrôle de type ACK, c'est-à-dire une trame émise par une entité ayant préalablement reçu une trame de données, destinée à confirmer à l'entité émettrice de la trame de données la réception correcte de la trame de données. Le champ SIG'" d'une trame de contrôle de type ACK comprend, outre un champ PLCP type (de valeur ACK), un champ Partial RA.

La **figure 3D** illustre la composition d'une trame de contrôle de type PSPOLL, c'est-à-dire une trame émise par une entité sortant d'un mode veille et souhaitant indiquer, à une autre entité apte à émettre une trame de données, qu'elle est dans un mode lui permettant de recevoir une trame de données. Le champ SIG"" d'une trame de contrôle de type PSPOLL comprend, outre un champ PLCP type (de valeur PSPOLL), un champ Partial RA et un champ Partial TA.

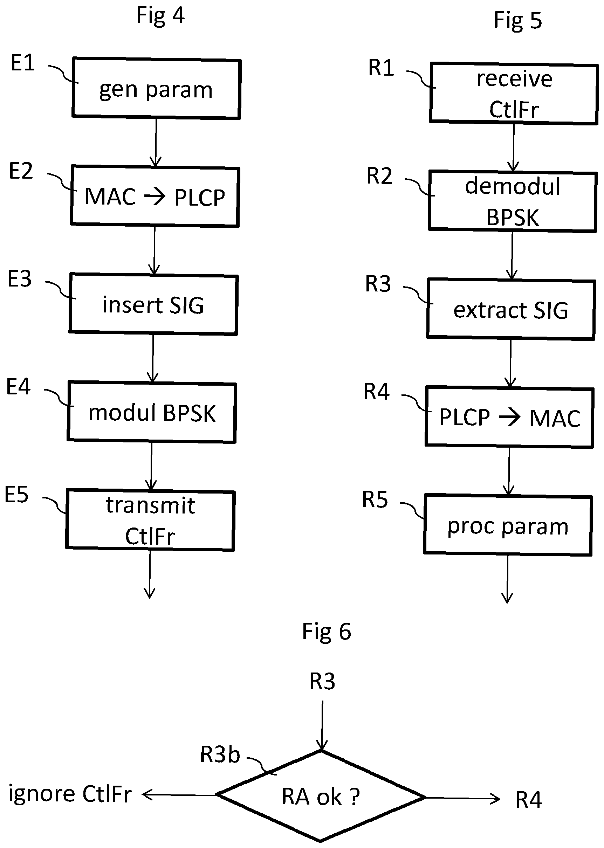

La **figure 4** présente les étapes du procédé d'émission d'une trame de contrôle selon un mode de réalisation de l'invention.

Le procédé est présenté en se basant sur l'exemple de la trame RTS1 en référence à la figure 2.

Lors d'une étape E1, l'entité EE1 génère au niveau de sa couche MAC les paramètres caractérisant la trame RTS1, soit:
- Le type de la trame de contrôle objet du procédé: RTS,
- La durée de l'échange complet entre les entités EE1 et ER2, tenant compte du débit du canal de transmission, de la longueur des trames RTS1, CTS1, de la trame de données, et des intervalles SIFS et des modulations utilisées; cette durée peut être exprimée en microsecondes ou en nombre de symboles OFDM,
- L'identifiant simplifié de l'entité réceptrice (ER1): Partial RA,
- L'identifiant simplifié de l'entité émettrice (EE1): Partial TA.

Lors d'une étape E2, ces paramètres, générés par la couche MAC, sont transférés à la couche PLCP de l'entité EE1.

Lors d'une étape E3, la couche PLCP de l'entité EE1 insère les paramètres de la couche MAC dans le champ SIG' d'une trame de contrôle comportant, outre le champ SIG', un champ STF et un champ LTF.

Lors d'une étape E4, la couche PLCP de l'entité EE1 applique une modulation de type BPSK au champ SIG'. La trame RTS1 est maintenant prête à être émise.

Lors d'une étape E5, la couche PLCP de l'entité EE1 émet la trame RTS1.

La **figure 5** présente les étapes du procédé de réception d'une trame de contrôle selon un mode de réalisation de l'invention.

Le procédé est présenté en se basant sur l'exemple de la trame RTS1 en référence à la figure 2.

Lors d'une étape R1, la couche PLCP de l'entité ER1 reçoit la trame RTS1 et détecte qu'elle est composée d'un champ STF, d'un champ LTF et d'un champ SIG'.

Lors d'une étape R2, la couche PLCP de l'entité ER1 démodule le champ SIG' de la trame RTS1.

Lors d'une étape R3, la couche PLCP de l'entité ER1 extrait du champ SIG' les paramètres de couche MAC suivants:
- Le type de la trame de contrôle objet du procédé: RTS,
- La durée de l'échange complet réservé par l'entité EE1,
- L'identifiant simplifié de l'entité réceptrice (ER1): Partial RA,
- L'identifiant simplifié de l'entité émettrice (EE1): Partial TA.

Lors d'une étape R4, ces paramètres sont transférés de la couche PLCP à la couche MAC de l'entité EE1.

Lors d'une étape R5, les paramètres sont traités au niveau de la couche MAC. Le traitement inclut la décision de répondre par une trame CTS1. Cette décision est suivie par des étapes similaires aux étapes E1 à E5 précédemment décrites, menant à l'émission de la trame CTS1 par ER1 vers EE1.

La **figure 6** présente des étapes du procédé de réception d'une trame de contrôle selon un autre mode de réalisation de l'invention.

Dans cette variante avantageuse, lors d'une étape R3b faisant suite à l'étape R3, la couche PLCP vérifie que l'identifiant simplifié de l'entité réceptrice, Partial RA, extrait du champ SIG', correspond bien à celui de l'entité ER1.

S'il y a correspondance, l'étape suivante reste l'étape R4.

S'il n'y a pas correspondance, la trame de contrôle reçue est ignorée car elle n'est pas destinée à l'entité ER1, et les étapes R4 et R5 ne sont pas exécutées. Ceci permet de déterminer au plus vite que la trame n'est pas destinée à ER1, sans avoir à transmettre les paramètres extraits à la couche MAC pour qu'elle soit en mesure d'arriver à la même conclusion. Ainsi, un gain en temps et en calculs est réalisé.

L'invention est mise en œuvre au moyen de composants logiciels et/ou matériels. Dans cette optique, les termes "module" et "unité" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit pour le module concerné.

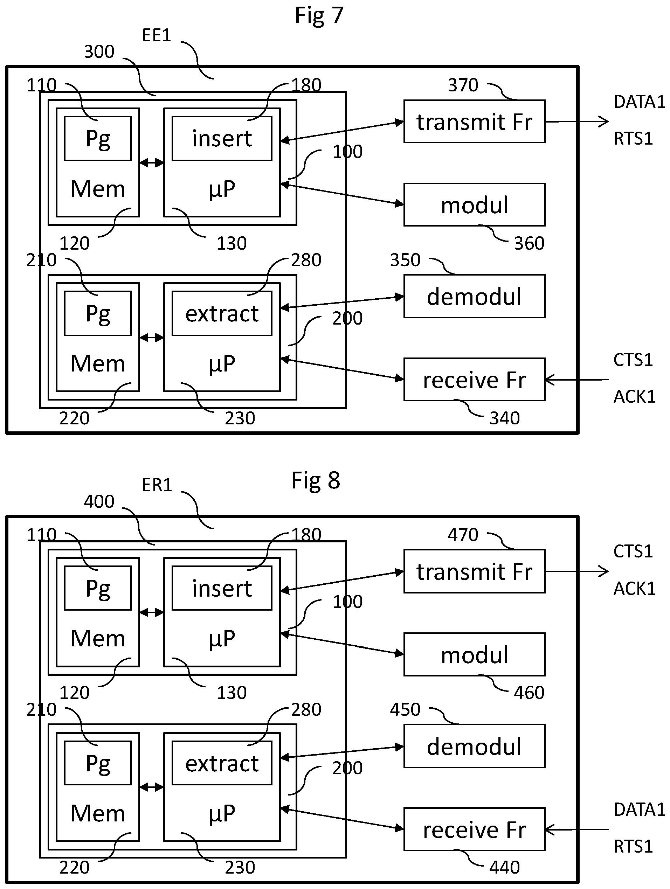

En relation avec la **figure 7****,** on présente maintenant un exemple de structure d'une entité émettrice EE1 selon l'invention.

Dans cet exemple, l'entité émettrice EE1 comprend au moins :
- un dispositif 300 d'émission d'une trame de données,
- un module d'émission 370, apte à émettre une trame de contrôle (RTS1) ou une trame de données (DATA1),
- un modulateur 360, apte à moduler des champs d'une trame avant son émission,
- un démodulateur 350, apte à démoduler des champs d'une trame après sa réception,
- un module de réception 340, apte à recevoir une trame de contrôle (CTS1, ACK1).

Le dispositif 300 d'émission d'une trame de données comprend au moins :
- un dispositif 100 d'émission d'une trame de contrôle, apte à mettre en œuvre les étapes du procédé d'émission d'une trame de contrôle tel que décrit précédemment,
- un dispositif 200 de réception d'une trame de contrôle, apte à mettre en œuvre les étapes du procédé de réception d'une trame de contrôle tel que décrit précédemment.

Le dispositif 100 d'émission d'une trame de contrôle comprend une unité de traitement 130 équipée d'un microprocesseur apte à mettre en œuvre les moyens constitutifs de l'invention tels que décrits précédemment. En particulier, le dispositif 100 comprend une unité 180 d'insertion d'informations relatives à une deuxième couche dans un champ d'entête relatif à une première couche. L'unité d'insertion 180 est pilotée par le microprocesseur de l'unité de traitement 130.

Le dispositif 100 comprend en outre une mémoire 120 dans laquelle est stockée un programme d'ordinateur 110 mettant en œuvre les étapes du procédé d'émission d'une trame de contrôle. A l'initialisation, les instructions de code du programme d'ordinateur 110 sont par exemple chargées dans une mémoire RAM, avant d'être exécutées par le processeur de l'unité de traitement 130.

Le dispositif 100 d'émission d'une trame de contrôle est apte à coopérer au moins avec le module d'émission 370 et le modulateur 360.

Par exemple, sur pilotage de l'unité de traitement 130, l'unité d'insertion 180 insère les paramètres PLCP type, DUR, Partial RA et Partial TA dans un champ SIG d'une trame de contrôle RTS. L'unité de traitement 130 commande ensuite au modulateur 360 de moduler le champ SIG, puis le module d'émission 370 d'émettre la trame RTS.

Le dispositif 200 de réception d'une trame de contrôle comprend une unité de traitement 230 équipée d'un microprocesseur apte à mettre en œuvre les moyens constitutifs de l'invention tels que décrits précédemment. En particulier, le dispositif 200 comprend une unité 280 d'extraction d'informations relatives à une deuxième couche dans un champ d'entête relatif à une première couche. L'unité d'extraction 280 est pilotée par le microprocesseur de l'unité de traitement 230.

Le dispositif 200 comprend en outre une mémoire 220 dans laquelle est stockée un programme d'ordinateur 210 mettant en œuvre les étapes du procédé de réception d'une trame de contrôle. A l'initialisation, les instructions de code du programme d'ordinateur 210 sont par exemple chargées dans une mémoire RAM, avant d'être exécutées par le processeur de l'unité de traitement 230.

Le dispositif 200 de réception d'une trame de contrôle est apte à coopérer au moins avec le module de réception 340 et le démodulateur 350.

Par exemple, lorsqu'une trame CTS est reçue par le module de réception 340, l'unité de traitement 230 commande au module 340 de passer au démodulateur 350 le champ SIG de la trame afin qu'elle soit démodulée. Puis, sur pilotage de l'unité de traitement 230, l'unité d'extraction 280 extrait les paramètres PLCP type, DUR, et Partial RA du champ SIG démodulé.

En relation avec la **figure 8****,** on présente maintenant un exemple de structure d'une entité réceptrice ER1 selon l'invention.

Dans cet exemple, l'entité réceptrice ER1 comprend au moins :
- un dispositif 400 de réception d'une trame de données,
- un module de réception 440, apte à recevoir une trame de données (DATAI) ou une trame de contrôle (RTS1),
- un démodulateur 450, apte à démoduler des champs d'une trame après sa réception,
- un modulateur 460, apte à moduler des champs d'une trame avant son émission,
- un module d'émission 470, apte à émettre une trame de contrôle (CTS1, ACK1).

Le dispositif 400 d'émission d'une trame de données comprend au moins :
- un dispositif 100 d'émission d'une trame de contrôle, déjà décrit en relation avec la figure 7,
- un dispositif 200 de réception d'une trame de contrôle, déjà décrit en relation avec la figure 7.

Selon un mode de réalisation préféré de l'invention, une entité peut être à la fois entité émettrice (EE1) et entité réceptrice (ER1). Dans ce cas il est possible de n'utiliser qu'un seul module d'émission 370 ou 470, un seul modulateur 360 ou 460, un seul démodulateur 350 ou 450, et/ou un seul module de réception 340 ou 440.

Les exemples de réalisation de l'invention qui viennent d'être présentés ne sont que quelques uns des modes de réalisation envisageables. Ils montrent que l'invention permet de réduire la bande passante prise par les trames de contrôle dans le trafic de données, d'en augmenter la robustesse de transmission, et de réduire le nombre et la complexité des opérations de modulation dans l'entité émettrice, ainsi que le nombre et la complexité des opérations de démodulation dans l'entité réceptrice.

## Revendications

1. **Procédé d'émission d'une trame de contrôle** par une entité émettrice (EE1) vers une entité réceptrice (ER1), selon le protocole WiFi comprenant une couche PLCP et une couche MAC, la trame de contrôle (RTS1) comprenant un champ SIG d'entête (SIG') de la couche PLCP, le procédé comprenant une étape (E3) d'insertion dans ledit champ d'entête SIG d'un paramètre (Partial RA) de couche MAC destiné à identifier une entité réceptrice de la trame de contrôle, et une étape de modulation (E4), selon une technique de modulation relative à la couche PLCP, préalable à une étape (E5) d'émission de la trame de contrôle modulée.

2. **Procédé d'émission d'une trame de contrôle** selon la revendication 1, où au moins une information d'un groupe comprenant au moins:
• une information relative au type de trame de contrôle (PLCP type),
• une information relative à la durée (DUR) de l'échange entre les entités émettrice et réceptrice,
• un identifiant de l'entité émettrice (Partial TA);
est également insérée dans le champ SIG lors de l'étape d'insertion (E3).

3. **Procédé d'émission d'une trame de données** par une entité émettrice (EE1) vers une entité réceptrice (ER1), **caractérisé en ce qu'**il comprend, préalablement à une étape d'émission de la trame de données (DATAI), les étapes suivantes:
• émission d'une trame de contrôle de demande de réservation (RTS1), destinée à réserver un canal de communication entre l'entité émettrice et l'entité réceptrice, la trame de contrôle de demande de réservation étant émise conformément au procédé d'émission d'une trame de contrôle selon la revendication 1,
• réception d'une trame de contrôle de confirmation de réservation (CTS1), destinée à confirmer à l'entité émettrice la réservation du canal de communication par l'entité réceptrice.

4. **Procédé de réception d'une trame de données** par une entité réceptrice (ER1) depuis une entité émettrice (EE1), **caractérisé en ce qu'**il comprend, suite à une étape de réception de la trame de données (DATAI), une étape d'émission d'une trame de contrôle d'acquittement (ACK1), destinée à acquitter à l'entité émettrice la réception de la trame de données, la trame de contrôle d'acquittement étant émise conformément au procédé d'émission d'une trame de contrôle selon la revendication 1.

5. **Procédé de réception d'une trame de données** selon la revendication 4, **caractérisé en ce que** l'étape de réception d'une trame de données est précédée d'une étape d'émission d'une trame de contrôle d'indication de sortie de veille, destinée à informer l'entité émettrice que l'entité réceptrice est sortie d'un mode veille et prête à recevoir une trame de données, la trame de contrôle d'indication de sortie de veille étant émise conformément au procédé d'émission d'une trame de contrôle selon la revendication 1.

6. **Programme d'ordinateur, caractérisé en ce qu'**il comprend des instructions pour la mise en œuvre des étapes du procédé d'émission d'une trame de contrôle selon la revendication 1, lorsque ce programme est exécuté par un processeur.

7. **Support d'informations** lisible par une entité émettrice (EE1) d'une trame de contrôle selon le protocole WiFi, et comportant des instructions d'un programme d'ordinateur (110) conforme à la revendication 6.
